(19) Europäisches Patentamt
European Patent Office
Office européen des brevets

(11) Publication number: 0 156 631 A2

(12) # EUROPEAN PATENT APPLICATION

(21) Application number: 85302007.1

(22) Date of filing: 22.03.85

(51) Int. Cl.[4]: C 23 F 11/173
E 21 B 41/02

(30) Priority: 29.03.84 US 594518

(43) Date of publication of application: 02.10.85 Bulletin 85/40

(84) Designated Contracting States: DE FR GB NL

(71) Applicant: THE DOW CHEMICAL COMPANY
2030 Dow Center Abbott Road P.O. Box 1967
Midland, MI 48640(US)

(72) Inventor: Treybig, Duane Stephen
226 Banyon Drive
Lake Jackson Texas 77566(US)

(72) Inventor: Glass, Terry Wayne
409 Oyster Creek Ct.
Clute,Texas 77531(US)

(74) Representative: Burford, Anthony Frederick et al,
W.H. Beck, Greener & Co. 7 Stone Buildings Lincoln's Inn
London WC2A 3SZ(GB)

(54) **Corrosion inhibitors.**

(57) Corrosion inhibitors useful in protecting metals comprise the reaction product of an α, β-ethylenically unsaturated aldehyde and an organic amine wherein the reaction product optionally is further reacted with a compound such as a carboxylic acid or an epoxide which reacts with amines.

EP 0 156 631 A2

# CORROSION INHIBITORS

The present invention relates to new and useful corrosion inhibitors and in particular to corrosion inhibitors which materially reduce the effects of attack of reactive materials on metals of construction.

In oil producing applications, metal tubing, sucker rods, valves, screens, coatings, pumps, and the like are subjected to the action of extremely corrosive fluids and gases. Such sweet and/or sour corrosive compositions can contain dissolved materials such as hydrogen sulfide, sulfur dioxide, carbon dioxide, oxygen, mineral acids, organic acids, and the like, as well as mixtures thereof.

Numerous processes for inhibiting the corrosion of metals caused upon exposure to corrosive oil and gas well fluids have been proposed. See, for example, U.S. Patent Nos. 2,643,977 and 3,077,454. Unfortunately, such processes are not effective under the conditions of high temperatures and pressures experienced by metal equipment in extremely deep oil and gas wells. Such conventional corrosion inhibitors

can have a tendency to degrade, volatilize, or polymerize causing formation damage and/or inadequate corrosion protection.

In view of the deficiencies of the prior art, it would be highly desirable to provide a corrosion inhibitor which is easily prepared and can be effectively employed under very high temperature and pressure conditions.

The present invention is an improved corrosion inhibitor comprising the reaction product of (1) an α,β-ethylenically unsaturated aldehyde, and (2) an organic amine; wherein said reaction product is optionally further reacted with (3) a compound or compounds comprising a functionality or functionalities capable of undergoing a reaction, quaternization or neutralization with an amine.

The present invention includes improved corrosion inhibitors comprising the reaction product of (1) an admixture of an α,β-ethylenically unsaturated aldehyde and (3) a compound or compounds comprising a functionality or functionalities capable of undergoing a reaction, quaternization, neutralization with an amine, and (2) an organic amine.

In another aspect, the present invention is a process for preventing the corrosion of a metal composition in contact with down hole well fluids, which process comprises contacting the surface of said metal composition with an effective amount of the aforementioned corrosion inhibitor.

The present invention provides corrosion protection to metal compositions exposed to corrosive gases and/or fluids at high temperatures and pressures, such as are experienced in deep oil and gas wells.

The corrosion inhibitors of the present invention act to protect metal compositions from corrosive effects of fluids and gases which are present in down hole well environments. Metal compositions typically include steel, iron, ferrous alloys, and other alloys of which typical sucker rods, valves, pumps, etc. are comprised.

The α,β-ethylenically unsaturated aldehydes useful herein can be generally represented by the formula:

$$H-\underset{R}{\overset{O}{\overset{\|}{C}}}-CH=\underset{R^1}{C}-R^2$$

wherein each R, $R^1$ and $R^2$ are individually hydrogen, alkyl, aryl, aralkyl or substituted alkyl, aryl or aralkyl. Substituents include, for example, halo, alkoxy and amino groups. Examples of suitable α,β-monoethylenically unsaturated aldehydes are disclosed in U.S. Patent No. 3,459,710. Other such aldehydes include, for example, furfuryl acrolein, bromo or chloro cinnamaldehyde, and hexenal. The preferred α,β-ethylenically unsaturated aldehyde is acrolein or mixtures thereof with other aldehydes.

The organic amines of this invention can include those organic diamines of the type disclosed in the aforementioned U.S. Patent No. 3,459,710. See also those polyamines disclosed in U.S. Patent No. 4,292,413. Other polyamines include, for example, triethylenetetraamine, tetraethylenepentamine, pentaethylenehexamine, polyoxypropyleneamine, iminobispropylamine, aminoethanolamine, and the like as well as mixtures thereof. In addition, monofunctional amines that can be utilized include diglycolamines, dodecylamine, cocoamine, hexadecylamine, octadecylamine, tallowamine, and the like. Of the foregoing polyamines, those polyamines containing at least one primary amine are preferred; with those polyamines capable of forming imidazolidine or hexahydropyrimidine moieties or substituted moieties thereof being most preferred. Polyamines can be ethoxylated or polyethoxylated. Preferred polyamines are ethylenediamine and propylenediamine.

The compounds comprising a functionality and/or functionalities capable of undergoing a reaction, quaternization or neutralization with an amine (i.e., substituent compounds) include, for example, compounds comprising carboxylic acid moieties, epoxide moieties, and the like. For example, a carboxylic acid moiety can react with an amine to form a salt, amide or amidine--type linkage. Most preferably, substituent compounds include the polycarboxylic acids and polyepoxides. Such compounds are capable of introducing desired crosslinking to the product. Monocarboxylic acid compounds and monoepoxide compounds can be employed. Examples of suitable carboxylic acids include acetic acid, benzoic acid, phthalic acid, terephthalic acid, octanoic acid, myristic acid, palmitic acid, oleic

acid, isostearic acid, capric acid, caprylic acid, lauric acid, tall oil fatty acids, dimer acids, trimer acids and similar mono- and poly- carboxylic acids. Other suitable acids are disclosed in U.S. Patent No. 4,339,349. Examples of suitable mono- and poly-expoxides include epoxidized vegetable oils such as epoxidized linseed oil, epoxidized carboxylic acids such as epoxidized oleic acid, the glycidyl ethers, and the like. See U.S. Patent No. 4,292,413 for representative epoxide compounds. Other suitable compounds comprising a functionality or functionalities capable of undergoing a reaction, quaternization or neutralization with an amine include, for example, inorganic acids, organic halides (e.g., an organic polyhalide), aldehydes, alkylene oxides, cyanides, nitriles, sulfur containing compounds such as mercaptans, and the like. Preferably, the substitutent compound has a predominantly hydrophobic character.

Products used in this invention are preferably prepared by first reacting the organic amine with the α,β-ethylenically unsaturated aldehyde. Preferably, the reaction is carried out in an inert atmosphere and at a temperature between about 0°C and about 150°C. The choice of inert solvent is generally dependent upon the boiling point of the amine, the solubility of the amine and the solubility of the resulting polymer. Advantageously, the solvent is one in which both the monomers and resultant polymer are soluble. Suitable solvents include methanol, ethanol, butanol, benzene, water, dioxane, dimethylformamide, tetrahydrofuran, and the like.

Preferably nearly equimolar amounts of amine and unsaturated aldehyde are employed. Preferably, the organic amine is dissolved in a suitable solvent in a reaction vessel. A solution of the unsaturated aldehyde and suitable solvent is then contacted with the amine solution, preferably in a slow manner. The reaction mixture can be cooled or heated. Solvent can be removed by distillation. Preferably, a solvent, such as isopropanol can be added to the reaction mixture in order to create an azeotropic mixture for removing solvent and by-product.

Oligomer or polymer products usually have an average molecular weight less than 1,000 and are obtained from the reaction of α,β-ethylenically unsaturated aldehydes with organic polyamines. The polymers or oligomers within the scope of this invention comprise compounds having one or more vinyl, imine, enamine, ether, and hydroxyl functional groups. The reaction of an amine containing piperazine rings with an α,β-ethylenically unsaturated aldehyde introduces piperazine rings into the constituents of the product. The reaction of the carbonyl of α,β-monoethylenically unsaturated aldehyde with a primary amine forms an imine which readily cyclizes if labile (where the term "labile" is as defined in U.S. Patent No. 4,315,087) amine hydrogens are available, preferably in the γ or δ position relative to the nitrogen of the imine. An imidazolidine ring is formed from the reaction of the carbonyl of an α,β-monoethylenically unsaturated aldehyde with an ethylenepolyamine while a hexahydropyrimidine ring is formed from the reaction of the carbonyl of an α,β-monoethylenically unsaturated aldehyde with a propylenepolyamine. Some of the possible constituents

of the oligomers formed from the reaction of, for example, acrolein with ethylene diamine are believed to be represented by the following structures, although the authors do not wish to be limited by this theory:

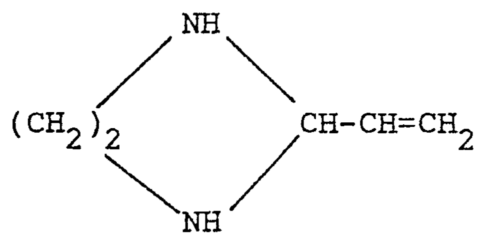

,

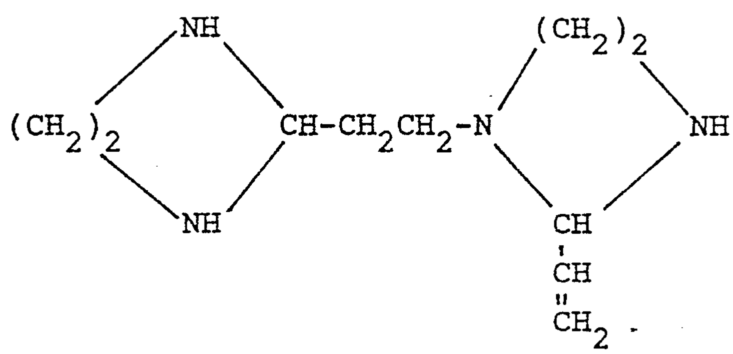

,

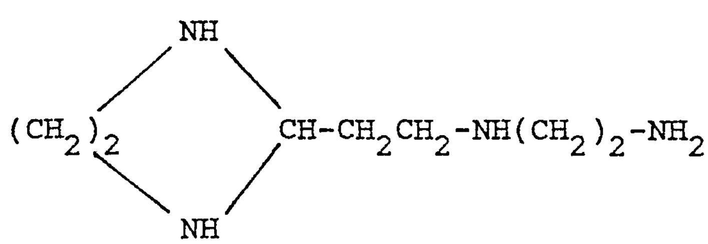

,

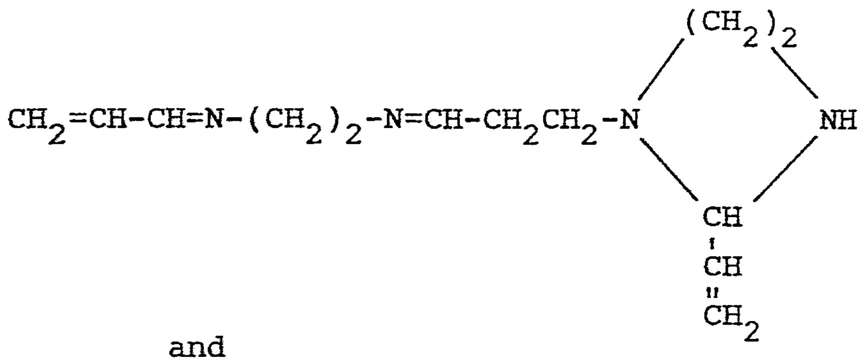,

and

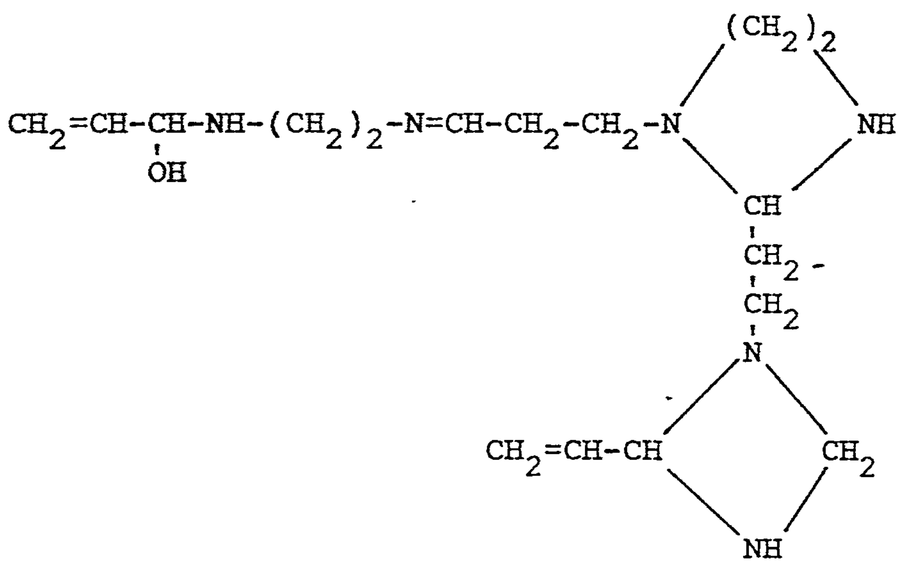,

The product which is isolated can be contacted with the compound comprising a functionality or functionalities capable of undergoing a reaction, quaternization or neutralization with an amine. The previously described product is dissolved or dispersed in a suitable solvent and contacted with the substitutent compound which is also dissolved in a suitable solvent. The amount of substitutent compound which is employed can vary such that 1 to 100 percent of the available amino hydrogens

of the amine/unsaturated aldehyde product can be reacted with reactive functionalites of the substituent compound. This resulting product can, if desired, be isolated using techniques such as distillation to remove by-products and solvent.

The resulting product can be employed as a corrosion inhibitor as are conventional corrosion inhibitors. Generally, the product can be employed in corrosion inhibitor formulations as are known in the art. For example, the product can be dispersed or dissolved in a suitable carrier liquid or solvent such as water, alcohols, aromatic and aliphatic hydrocarbons, and the like, or mixtures thereof. Other additives include demulsifiers, water wetting agents, surfactants, viscosifiers, commingled gases, defoamers, other corrosion inhibitors such as polymeric materials and salts, organic and inorganic acids, iron control agents, sequestering and/or chelating agents, phosphates, quaternaries, amine salts, and the like. For example, surface active agents are used to assure complete dispersion of active ingredients throughout the corrosion inhibitor composition and thus provide a better contact of the corrosion inhibitor with the surface of the metal compound which is being protected. The corrosion inhibitors of this invention form films on metal surfaces at least as readily as those known film forming corrosion inhibitors.

The corrosion inhibitor of this invention is employed in a functionally effective amount. That is, any quantity of corrosion inhibitor which will provide some degree of inhibition of corrosion is sufficient. Typical amounts of corrosion inhibitor which are employed in an oil and/or gas well treatment can range from

5 to 2,000 ppm for continuous treatment or 1,000 to 50,000 ppm for squeeze treatment, based on the weight of corrosive well fluids in contact with the metal compositions which are protected. Amounts of corrosion inhibitor in excess of 50,000 ppm can provide additional corrosion inhibition but at increased expense.

The corrosion inhibitors of this invention are highly stable to high temperatures and high pressures. Typically, corrosion inhibitors are employed in applications where temperatures range from 20°F (-7 °C) to in excess of 500°F (260°C), typically from 100° to 400°F (38° to 204°C), depending upon the composition of the polymer product. The corrosion inhibitors of this invention are especially useful at temperatures ranging from 300°F (149°C) to 450°F (232 °C).

The corrosion inhibitors of this invention inhibit corrosion to metal compositions used in down hole applications, preferably in excess of 80 percent corrosion protection. The corrosion inhibitors advantageously inhibit corrosion to metal compositions at elevated temperatures exceeding 250°C in oil and gas well applications. Useful applications include oil and/or gas well drilling, completion, workover, stimulation, transfer, processing and storage applications.

The following examples are presented to further illustrate but not limit the scope of this invention.

Example 1 - Preparation of Acrolein/Ethylenediamine Polymer Corrosion Inhibitor

Acrolein was distilled in the presence of 358 ppm and 379 ppm of hydroquinone in the boiling and receiving flasks, respectively. A solution of distilled acrolein was prepared by mixing 282.1 g acrolein with about 155 g methanol.

Into a reactor equipped with stirrer, thermometer condensor and addition funnel with nitrogen inlet tube was placed a solution of 300 g ethylenediamine and 510 g methanol. The reactor contents were stirred under nitrogen atmosphere while being held at a temperature of 4°C.

The acrolein solution was added to the reactor over a period of 160 minutes at such a rate that the rise in temperature did not exceed 23°C. The mixture was subjected to rotary evaporation at 100°C. An amount of 2-propanol was added to the mixture and said mixture was again subjected to rotary evaporation at 100°C. The product was a yellowish viscous liquid.

Example 2 - Preparation of Corrosion Inhibitor

A reaction product of acrolein and ethylenediamine was prepared and isolated as described in Example 1. This product (141.6 g) was mixed with 47.5 g methanol to form a solution. The solution was charged into a reactor of the type described in Example 1.

A solution containing 18.5 g of a $C_{12}$-$C_{14}$ alkyl glycidyl ether product (Epoxide 8) and about 980 g methanol was added dropwise to the aforementioned reactor while the mixture was stirred and refluxed at

68.5°C. After addition was completed, the mixture was stirred overnight at room temperature. The mixture was subjected to rotary evaporation at 100°C. The product was a reddish-brown viscous liquid. The product was designated as Sample No. 1.

Example 3 - Preparation of Corrosion Inhibitor

136.1 g of the product of Example 1 was dissolved in 785 g 2-propanol

A solution containing 249.3 g of 6-carboxy-4-hexyl-2-cyclohexene-1-octanoic acid having the formula:

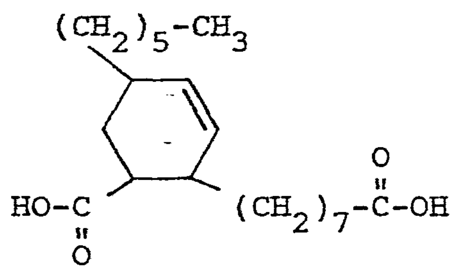

and 136.1 g 2-propanol was charged into a reactor of the type described in Example 1. To this mixture was added the previously described product mixture. The resulting mixture was refluxed at 86°C for 30 minutes, producing a product, which is believed to be a salt, in 2-propanol. The product was designated as Sample No. 2. The mixture was refluxed at 190°C. Water and 2-propanol were removed using a Barrett trap. The reactor contents were heated for 285 minutes at 170° to 230°C. This reaction product was cooled to room temperature, and a reddish-brown solid resulted. The product was redissolved in 2-propanol. The product was designated as Sample No. 3.

Example 4 - Preparation of Corrosion Inhibitor

A solution containing 411 g tall oil fatty acid, 57 g of the diacid described in Example 3 and 87 g 2-propanol was charged into a reactor. To this mixture was added 109 g of the product of Example 1 was dissolved in 386 g 2-propanol. The resulting mixture was refluxed at 200°C. Water and isopropanol were removed using a Barrett trap. The reactor contents were heated for 370 minutes between 165° to 200°C. The reddish-brown product was cooled to 80°C and 310 g 2-propanol was added. This mixture was cooled to room temperature and the product was designated as Sample No. 4.

Example 5 - Preparation of Corrosion Inhibitor

Into a reactor equipped with stirrer, thermometer, condenser and addition funnel with nitrogen inlet tube was placed a solution of 490 g of a mixture of ethyleneamines higher than triethylentetramine with an average molecular weight of 300 and 460 g methanol. The reactor contents were stirred under nitrogen atmosphere while being held at a temperature of 4°C.

A solution of acrolein was prepared by mixing 168 g of acrolein with 160 g methanol. The acrolein was added to the reactor over a period of 145 minutes at such a rate that the rise in temperature did not exceed 18°C. The mixture was subjected to rotary evaporation at 100°C. An amount of 2-propanol was added to the mixture and said mixture was again subjected to rotary evaporation at 100°C. The product was a reddish-brown viscous liquid and was designated as Sample No. 5.

Example 6 - Preparation of Corrosion Inhibitor

112 g of the product of Example 5 was poured into a reactor of the type described in Example 1. A solution containing 436 g of the diacid described in Example 3 and 390 g 2-propanol was added to the product. The resulting mixture was refluxed at 180°C. Water and 2-propanol were removed using a Barrett trap. The reactor contents were heated for 120 minutes at 170° to 180°C. The reaction product was cooled to 80°C and 315 g 2-propanol added. On cooling to room temperature a reddish brown liquid resulted and was designated as Sample No. 6.

Example 7

Differential scanning calorimetry (DSC) scans of various samples were performed using a DuPont Model 1090 Thermoanalyzer. Samples included three commercially available corrosion inhibitors (designated as Sample Nos. C-1, C-2 and C-3) and a reaction product of ethylenediamine/acrolein/diacid prepared as described in Example 3 (designated as Sample No. 3). Results are presented in Table I.

TABLE I

| Sample | Proposed Decomposition Temperature (°C) |
|---|---|
| 3 | 420 |
| C-1* | 300 |
| C-2* | 350 |
| C-3* | 310 |

*Not an example of this invention but presented for comparison purposes.

The data of Table I indicates that the corrosion inhibitor of this invention has a superior thermal stability to those corrosion inhibitors which are commercially available.

Example 8

Corrosion inhibition of various samples was determined under conditions which simulate conditions that exist in oil and gas wells as follows. A brine solution containing 89.89 percent deionized water, 9.62 percent sodium chloride, 0.305 percent calcium chloride and a 0.186 percent hydrated magnesium chloride complex was prepared. This brine solution was saturated under carbon dioxide purge until a pH of 3.8 was achieved. The solution was treated with sodium persulfate to remove oxygen. The desired corrosion inhibitor was added to the solution. 800 ml of this brine solution and 80 ml of kerosene treated with sodium persulfate were charged into a 32-ounce bottle. To this charge was added enough hydrated sodium sulfide to generate a suitable amount of hydrogen sulfide (i.e., 300 ppm hydrogen sulfide based on total fluids).

Metal coupons of 1020 carbon steel were degreased with an inhibited methylchloroform, acidized with 16 percent hydrochloric acid, washed and dried. Each coupon weighed 19 g. A metal coupon was placed in the bottle containing the brine, kerosene and ingredients as previously described. The bottle was capped and acetic acid was injected into the bottle through a septum. The bottle was placed on a vertically rotating wheel held at 175°C and the sample was rotated at 26 rpm for 24 hours. The coupons were removed from the bottle, cleaned, washed, dried and weighed.

The amount of corrosion of untreated coupons were compared to coupons which were tested in the presence of 100 ppm of each corrosion inhibitor sample. Results are presented in Table II.

TABLE II

| Inhibitor Sample | Inhibitor Concentration | Weight Loss (g) | Percent Protection |
|---|---|---|---|
| 2 | 100 ppm | 0.0126 | 84 |
| 3 | 100 ppm | 0.0133 | 84 |
| 5 | 100 ppm | 0.0178 | 78 |
| none* | 0 | 0.0810 | 0 |

*Not an example of this invention.

The data in Table II indicates that the samples of this invention exhibit good corrosion inhibition under simulated down hole tests. The corrosion inhibition of the samples of this invention is comparable to that exhibited by commercially available corrosion inhibitors.

Example 9

The corrosion protection afforded by various corrosion inhibitors is often improved by the presence of hydrogen sulfide. In other words, the corrosion inhibition of an inhibitor in non-hydrogen sulfide environments (sweet) is 10-20 percent less than the corrosion protection achieved in otherwise similiar hydrogen sulfide environments. It is a common practice to alleviate this problem by incorporating sulfur or sulfur containing compounds into a formulated corrosion

inhibitor by adding, for example, thiourea, dimethylsulfate, trithiones, and the like. This example demonstrates the performance of the inhibitors of this invention in non-hydrogen sulfide environments via a 175°F (79 °C) test excluding hydrogen sulfide. Results are presented in Table III. The numbers in parenthesis are the results of the same inhibitor in a similiar test containing hydrogen sulfide.

TABLE III

| Inhibitor Sample | Inhibitor Concentration | Weight Loss (g) | Percent Protection |
|---|---|---|---|
| None | 0 | 0.1184 (0.0810) | 0 |
| 2 | 100 ppm | 0.0196 (0.0126) | 83 (84) |
| 3 | 100 ppm | 0.0122 (0.0133) | 90 (84) |

These results indicate that the inhibitors of this invention perform nearly equally in hydrogen sulfide or non-hydrogen sulfide and carbon dioxide brine environments. Thus, the inhibitors of this invention advantageously provide good corrosion protection in sweet and/or sour down hole oil and gas well environments and require no special formulating for non-hydrogen sulfide environments.

Example 10

The following example demonstrates the performance of the inhibitors of this invention in a 24 hour 350°F (177 °C) wheel test containing 90 percent brine/8 percent heptane/2 percent kerosene at 2,000 psi (14 MPa) pressure (25°C) with 10 percent hydrogen sulfide, 10 percent carbon dioxide and 80 percent methane in a stainless steel pipe bomb.

TABLE IV

| Inhibitor Sample | Concentration | Weight Loss (g) | Percent Protection |
|---|---|---|---|
| none* | 0 | 0.1082 | 0 |
| C-4* | 100 ppm | 0.0246 | 77 |
| C-5* | 100 ppm | 0.0485 | 55 |
| 3 | 100 ppm | 0.0197 | 82 |

*Not an example of the invention.

Thus, the inhibitors of this invention advantageously provide good corrosion protection at 350°F (177 °C) demonstrating the value of these inhibitors for high temperature oil and gas well environments. This corrosion inhibition is surprisingly high as compared to commercially available corrosion inhibitors (Sample Nos. C-4 and C-5).

CLAIMS

1. A corrosion inhibitor characterized in that it is the reaction product of

(1) an α,β-ethylenically unsaturated aldehyde, optionally in admixture with (3), a compound or compounds comprising a functionality or functionalities capable of undergoing a reaction, quaternization or neutralization with an amine, and

(2) an organic amine; wherein said reaction product is optionally further reacted with

(3) a compound or compounds comprising a functionality or functionalities capable of undergoing a reaction, quaternization or neutralization with an amine.

2. A corrosion inhibitor as claimed in Claim 1, wherein the organic amine is a polyamine containing at least one primary amino group.

3. A corrosion inhibitor as claimed in Claim 2, wherein the organic amine is capable of forming imidazolidine hexahydropyrimidine moieties, or substituted moieties thereof.

4. A corrosion inhibitor as claimed in any one of the preceding claims, wherein the organic amine is an ethoxylated or polyethoxylated amine.

5. A corrosion inhibitor as claimed in any one of Claims 1 to 3, wherein the organic amine is ethylenediamine or propylenediamine.

6. A corrosion inhibitor as claimed in any one of the preceding claims, wherein the said aldehyde is acrolein.

7. A corrosion inhibitor as claimed in any one of the preceding claims, wherein (3) is a polycarboxylic acid, a polyepoxide or an organic polyhalide.

8. A corrosion inhibitor as claimed in Claim 6 or Claim 7, wherein (1) is acrolein, (2) is ethylenediamine, and (3) is a mono- or dicarboxylic acid or glycidyl ether.

9. A process for inhibiting the corrosion of a metal composition in contact with a down hole well fluid, which process is characterized by contacting the surface of said metal composition with an effective amount of the corrosion inhibitor as claimed in any one of the preceding claims.

10. Down hole well fluid characterized in that it contains 5 to 2,000 ppm, based on the weight of said well fluid, of a corrosion inhibitor as claimed in any one of Claims 1 to 8.

11. A liquid corrosion inhibitor composition characterized in that it comprises a corrosion inhibitor as claimed in any one of Claims 1 to 8 in a carrier liquid or solvent.